# EUROPÄISCHE PATENTSCHRIFT

(11) **EP 0 910 597 B1**
(45) Veröffentlichungstag und Bekanntmachung des Hinweises auf die Patenterteilung: **16.05.2001**
(21) Anmeldenummer: 97930439.1
(22) Anmeldetag: 30.06.1997
(51) Int. Cl.: C08G 18/81, C08G 18/77, C08G 18/76, C08G 18/66

(54) **VERFAHREN ZUR HERSTELLUNG VON ZELLIGEN POLYURETHAN-ELASTOMEREN AUF BASIS VON 3,3'-DIMETHOXY-4,4'-DIISOCYANATO-DIPHENYL UND/ODER 4,4'-STILBENDIISOCYANAT**
PROCESS FOR PREPARING CELLULAR POLYURETHANE ELASTOMERS BASED ON 3,3'-DIMETHOXY-4,4'DIISOCYANATO-DIPHENYL AND/OR 4,4'-STILBENE-DIISOCYANATE
PROCEDE DE PREPARATION D'ELASTOMERES CELLULAIRES DE POLYURETHANNE A BASE DE 3,3'-DIMETHOXY-4,4'-DIISOCYANATO-DIPHENYLE ET/OU DE 4,4'-STILBENE-DIISOCYANATE

(30) Priorität: 12.07.1996 DE 19628146; 12.07.1996 DE 19628145
(43) Veröffentlichungstag der Anmeldung: 28.04.1999
(73) Patentinhaber: BASF AKTIENGESELLSCHAFT, 67056 Ludwigshafen (DE)
(72) Erfinder: GENZ, Manfred, D-49401 Damme (DE); MERGER, Roland, D-76669 Bad Schönborn (DE); BOLLMANN, Heinz, D-49594 Alfhausen (DE); THÄRIGEN, Raina, D-49086 Osnabrück (DE); VOELKEL, Rüdiger, D-64625 Bensheim (DE); KRAUS, Rupert, D-67165 Waldsee (DE); POHL, Siegmund, D-67069 Ludwigshafen (DE)
(86) Internationale Anmeldenummer: EP9703395
(87) Internationale Veröffentlichungsnummer: WO9802477

(56) Entgegenhaltungen:
- EP-A- 0 253 172
- GB-A- 934 458
- US-A- 3 337 478
- US-A- 5 343 639

## Beschreibung

Gegenstand der Erfindung ist ein Verfahren zur Herstellung von mikrozellularen Polyurethan-Elastomeren, im folgenden auch abgekürzt PU-Elastomeren genannt.

Die Herstellung von kompakten oder zelligen, z.B. mikrozellularen PU-Elastomeren ist seit langem aus zahlreichen Patent- und Literaturveröffentlichungen bekannt.

Ihre technische Bedeutung beruht auf der Kombination hochwertiger mechanischer Eigenschaften mit den Vorteilen der kostengünstigen Verarbeitungsmethoden. Durch die Verwendung verschiedenartiger chemischer Aufbaukomponenten in unterschiedlichen Mengenverhältnissen können thermoplastisch verarbeitbare oder vernetzte, kompakte oder zellige PU-Elastomere hergestellt werden, die sich hinsichtlich ihrer Verarbeitbarkeit und ihren mechanischen Eigenschaften vielfältig unterscheiden. Eine Übersicht über PU-Elastomere, ihre Eigenschaften und Anwendungen wird z.B. im Kunststoffhandbuch, Band 7, Polyurethane, 1. Auflage 1966, herausgegeben von Dr. R. Vieweg und Dr. A. Höchstler, 2. Auflage, herausgegeben von Prof. Dr. G.W. Becker und Prof. Dr. D. Braun (Carl-Hanser-Verlag, München, Wien) gegeben.

Mikrozellulare PU-Elastomere zeichnen sich in Bezug auf die in analoger Weise verwendbaren Gummitypen durch ihre deutlich besseren Dämpfungseigenschaften bei einer ausgezeichneten Volumenkompressibilität aus, so daß sie als Bestandteile von schwingungs- und stoßdämpfenden Systemen, insbesondere in der Automobilindustrie, Verwendung finden. Zur Herstellung von mikrozellularen PU-Elastomeren haben sich Umsetzungsprodukte aus 1,5-NDI und Poly(ethylenglykoladipat) mit einem Molekulargewicht von 2000, die in Form eines Isocyanatprepolymeren mit einer aktivatorhaltigen, wäßrigen Lösung eines Fettsäuresulfonats zur Reaktion gebracht werden, bewährt. (Kunststoff-Handbuch, Band 7, Polyurethane, 1. Auflage, Seiten 270 ff und E.C. Prolingheuer, J.J. Lindzey, H. Kleimann, Journal of Elastomers und Plastics, Vol. 21, 1981, Seiten 100-121).

Da solche Basisformulierungen mikrozellulare PU-Elastomere mit sehr guten dämpfungscharakteristischen und statischen und dynamischen Leistungsparametern ergeben, sind aus dem Stand der Technik nur vereinzelte Bemühungen bekannt, das für die guten Elastomereigenschaften verantwortliche 1,5-NDI, trotz dessen schwieriger Handhabung wegen seines hohen Schmelzpunktes, durch leichter handhabbare und preisgünstigere Diisocyanate zu substituieren, da hierbei deutliche mechanische Eigenschaftsverluste resultieren.

JP-51,204,608 beschreibt ein Verfahren zur Herstellung von zelligen PU-Elastomeren unter Verwendung von Polyesterpolyolen und organischen Diisocyanaten, z.B. 3,3'-Dimethyl-4,4'-diisocyanatodiphenyl oder 4,4'-Diphenylmethandiisocyanat. Verbessert werden die Beständigkeit und es wird die Temperaturbeständigkeit erhöht.

US 53 43 639 beschreibt die Herstellung mikrozellularer PU-Elastomere aus Polyesterpolyolen und organischen Diisocyanaten, z.B.3,3'-Dimethyl-4,4'-diisocyanato-diphenyl, 1,5-NDI oder 4,4'-Diphenylmethandiisocyanat. Vorteile dieser in Sportschuhen eingesetzten Materialien sind eine verbesserte Dämpfung und Stabilität.

Die Aufgabe der vorliegenden Erfindung bestand darin, ein Verfahren zur Herstellung mikrozellularer PU-Elastomere bereitzustellen, bei dem das teure 1,5-NDI durch leichter handhabbare und kostengünstigere organische Diisocyanate ersetzt werden kann. Dabei sollten die mechanischen Eigenschaften der so hergestellten PU-Elastomere verbessert werden oder zumindest solchen auf 1,5-NDI-Basis im wesentlichen entsprechen. Unabhängig von der Art der verwendeten höhermolekularen Polyhydroxylverbindung sollten die mikrozellularen PU-Elastomeren im Vergleich zu PU-Elastomeren auf 4,4'-MDI-Basis eindeutig verbesserte statische und mechanische Kennwerte, insbesondere Druckverformungsreste besitzen, so daß sie zur Herstellung von Schwingungs- und Stoßdämpfer-Systemen verwendet werden können.

Überraschenderweise wurde gefunden, daß unter Verwendung von 3,3'-Dimethoxy-4,4'-diisocyanato-diphenyl und/oder 4,4'-Stilbendiisocyanat mikrozellulare Polyurethan-Elastomere mit außerordentlich guten mechanischen Eigenschaften erhalten werden.

Gegenstand der Erfindung ist somit ein Verfahren zur Herstellung von mikrozellularen PU-Elastomeren durch Umsetzung von
a) höhermolekularen Polyhydroxylverbindungen und gegebenenfalls
b) niedermolekularen Kettenverlängerungs- und/oder Vernetzungsmitteln mit
c) 3,3'-Dimethoxy-4,4'diisocyanato-diphenyl und/oder 4,4'-Stilbendiisocyanat in Abwesenheit oder vorzugsweise in Gegenwart von
d) Katalysatoren
e) Treibmitteln und
f) Zusatzstoffen,
dadurch gekennzeichnet, daß als organisches Diisocyanat 3,3'-Dimethoxy-4,4'diisocyanato-diphenyl und/oder 4,4'-Stilbendiisocyanat verwendet wird.

Nach der bevorzugt angewandten Herstellungsweise werden die PU-Elastomere nach dem Prepolymerverfahren hergestellt, wobei zweckmäßigerweise aus der höhermolekularen Polyhydroxylverbindung (a) und 3,3'-Dimethoxy-4,4'diisocyanato-diphenyl und/oder 4,4'-Stilbendiisocyanat (c) und gegebenenfalls einem niedermolekularen Kettenverlängerungs- und/oder Vernetzungsmittel (b) ein Urethan- und Isocyanatgruppen aufweisendes Polyadditionsprodukt hergestellt wird. Mikrozellulare PU-Elastomere können aus derartigen Isocyanatgruppen aufweisenden Prepolymeren durch Umsetzung mit Wasser oder Mischungen aus Wasser und gegebenenfalls niedermolekularen Kettenverlängerungs- und/oder Vernetzungsmitteln (b) und/oder höhermolekularen Polyhydroxylverbindungen (a) hergestellt werden.

Gegenstand der Erfindung sind ferner Isocyanatgruppen aufweisende Prepolymere mit einem NCO-Gehalt von 2 bis 20 Gew.-%, vorzugsweise 3,5 bis 10 Gew.-%, die hergestellt werden durch Umsetzung mindestens einer höhermolekularen Polyhydroxylverbindung (a) oder einer Mischung aus (a) und einem niedermolekularen Kettenverlängerungs- und/oder Vernetzungsmittel (b) mit 3,3'-Dimethoxy-4,4'-diisocyanato-diphenyl und/oder 4,4'-Stilbendiisocyanat (c) zu einem Urethan- und Isocyanatgruppen aufweisenden Polyadditionsprodukt.

Zu den Ausgangsstoffen (a) bis (f) zur Herstellung der kompakten oder vorzugsweise zelligen, z.B. mikrozellularen PU-Elastomeren und dem erfindungsgemäßen Verfahren ist folgendes auszuführen:
a) Geeignete höhermolekulare Polyhydroxylverbindungen besitzen vorteilhafterweise eine Funktionalität von 3 oder vorzugsweise 2 und ein Molekulargewicht von 500 bis 6000, vorzugsweise von 800 bis 3500 und insbesondere von 1000 bis 3300 und bestehen aus hydroxylgruppenhaltigen Polymeren, z.B. Polyacetalen, wie Polyoxymethylenen und vor allem wasserunlöslichen Formalen, z.B. Polybutandiolformal und Polyhexandiolformal, Polyoxyalkylenpolyolen, wie z.B. Polyoxybutylenglykolen, Polyoxybutylenpolyoxyethylenglykolen, Polyoxybutylenpolyoxypropylenglykolen, Polyoxybutylenpolyoxypropylenpolyoxyethylenglykolen, Polyoxypropylenpolyolen und Polyoxypropylenpolyoxyethylenpolyolen, und Polyesterpolyolen, z.B. Polyesterpolyolen aus organischen Dicarbonsäuren und/oder Dialkylenglykolen, aus Hydroxycarbonsäuren und Lactonen sowie hydroxylgruppenhaltigen Polycarbonaten.
   Als höhermolekularen Polyhydroxylverbindung hervorragend bewährt haben sich und daher vorzugsweise verwendet werden difunktionelle Polyhydroxylverbindungen mit Molekulargewichten von größer 800 bis 3500, vorzugsweise von 1000 bis 3300 ausgewählt aus der Gruppe der Polyesterpolyole, hydroxylgruppenhaltigen Polycarbonate und Polyoxybutylenglykole. Die höhermolekularen Polyhydroxylverbindungen können einzeln oder als Mischungen verwendet werden.
   Geeignete Polyoxyalkylenpolyole können hergestellt werden nach bekannten Verfahren, beispielsweise durch anionische Polymerisation mit Alkalihydroxiden, wie z.B. Natrium- oder Kaliumhydroxid, oder Alkalialkoholaten, wie z.B. Natriummethylat, Natrium- oder Kaliumethylat oder Kaliumisopropylat, als Katalysatoren und unter Zusatz mindestens eines Startermoleküls, das 2 oder 3, vorzugsweise 2 reaktive Wasserstoffatome gebunden enthält, oder durch kationische Polymerisation mit Lewis-Säuren, wie z.B. Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest.
   Geeignete Alkylenoxide sind beispielsweise 1,3-Propylenoxid, 1,2-bzw. 2,3-Butylenoxid, vorzugsweise Ethylenoxid und 1,2-Propylenoxid und insbesondere Tetrahydrofuran. Die Alkylenoxide können einzeln, alternierend nacheinander oder als Mischung verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, N-mono- und N,N'-dialkylsubstituierte Diamine mit 1 bis 4 Kohlenstoffatomen im Alkylrest, wie mono- und dialkylsubstituiertes Ethylenamin, 1,3-Propylendiamin, 1,3- bzw. 1,4-Butylendiamin, 1,2-, 1,3-, 1,4-, 1,5-, und 1,6-Hexamethylendiamin, Alkanolamine, wie z.B. Ethanolamin, N-Methyl- und N-Ethyl-diethanolamin und Trialkanolamine, wie z.B. Triethanolamin und Ammoniak. Vorzugsweise verwendet werden zwei- und/oder dreiwertige Alkohole, z.B. Alkandiole mit 2 bis 12 C-Atomen, vorzugsweise 2 bis 4 C-Atomen, wie z.B. Ethandiol, Propandiol-1,2 und -1,3, Butandiol-1,4, Pentandiol-1,5, Hexandiol-1,6, Glycerin und Trimethylolpropan und Dialkylenglykole, wie z.B. Diethylenglykol und Dipropylenglykol. Als Polyoxyalkylenpolyole bevorzugt verwendet werden Polyoxybutylenglykole (Polyoxytetramethylenglykole) mit Molekularge wichten von 500 bis 3000, vorzugsweise von 650 bis 2300.
   Als Polyhydroxylverbindungen (a) bevorzugt verwendet werden können ferner Polyesterpolyole, die beispielsweise aus Alkandicarbonsäuren mit 2 bis 12 Kohlenstoffatomen, vorzugsweise Alkandicarbonsäuren mit 4 bis 6 Kohlenstoffatomen und/oder aromatischen Dicarbonsäuren und mehrwertigen Alkoholen, vorzugsweise Alkandiolen mit 2 bis 12 Kohlenstoffatomen, vorzugsweise 2 bis 6 Kohlenstoffatomen und/oder Dialkylenglykolen hergestellt werden können. Als Alkandicarbonsäuren kommen beispielsweise in Betracht: Bernsteinsäure, Glutarsäure, Adipinsäure, Korksäure, Azelainsäure, Sebacinsäure und Decandicarbonsäure. Geeignete aromatische Dicarbonsäuren sind z.B. Phthalsäure, Isophthalsäure und Terephthalsäure. Die Alkandicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäuremono- oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35:35 bis 50:20 bis 32 Gew.-Teilen, und insbesondere Adipinsäure. Beispiele für zwei- und mehrwertige Alkohole, insbesondere Alkandiole oder Dialkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5 Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.
   Zur Herstellung der Polyesterpolyole können die aromatischen und/oder aliphatischen Dicarbonsäuren und vorzugsweise Alkandicarbonsäuren und/oder -derivaten und mehrwertigen Alkoholen katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/ oder Schleppmitteln, wie z.B. Benzol, Toluol, Xylol oder Chlorbenzol, zur azeotropen Abdestillation des Kondensationswassers durchgeführt werden.
   Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Als Polyesterpolyole vorzugsweise verwendet werden Poly(alkandioladipate) wie z.B. Poly(ethandioladipate), Poly(1,4-butandioladipate), Poly(ethandiol-1,4-butandioladipate), Poly(1,6- hexandiol-neopentylglykoladipate) und Poly(1,6-hexandiol-1,4- butandioladipate) und Polycaprolactone.
   Als geeignete Polyesterpolyole sind ferner Hydroxylgruppen aufweisende Polycarbonate zu nennen. Derartige hydroxylgruppenhaltige Polycarbonate können beispielsweise hergestellt werden durch Umsetzung der vorgenannten Alkandiole, insbesondere von 1,4-Butandiol und/oder 1,6-Hexandiol, und/oder Dialkylenglykole, wie z.B. Diethylenglykol, Dipropylenglykol und Dibutylenglykol, mit Dialkyl- oder Diarylcarbonaten, z.B. Diphenylcarbonat, oder Phosgen.
   Als Hydroxylgruppen aufweisende Polycarbonate werden bevorzugt Polyetherpolycarbonatdiole verwendet, die hergestellt werden können durch Polykondensation von
   a1) Polyoxybutylenglykol mit einem Molekulargewicht
      von
      150 bis 500 oder von
   a2) Mischungen, die bestehen aus
      i) mindestens 10 mol-%, vorzugsweise 50 bis 95 mol-% eines Polyoxybutylenglykols mit einem Molekulargewicht von 150 bis 500 (a1) und
      ii) weniger als 90 mol-%, vorzugsweise 5 bis 50 mol-% mindestens eines von (a1) verschiedenen Polyoxyalkylenglykols mit einem Molekulargewicht von 150 bis 2000, mindestens eines Dialkylenglykols, mindestens eines linearen oder verzweigten Alkandiols mit 2 bis 12 Kohlenstoffatomen und mindestens eines cyclischen Alkandiols mit 5 bis 15 Kohlenstoffatomen oder Mischungen davon
         mit Phosgen, Diphenylcarbonat oder Dialkylcarbonaten mit C₁- bis C₄-Alkylgruppen.
b) Zur Herstellung der kompakten oder vorzugsweise zelligen PU-Elastomeren nach dem erfindungsgemäßen Verfahren können zusätzlich zu den höhermolekularen Polyhydroxylverbindungen (a) gegebenenfalls auch niedermolekulare difunktionelle Kettenverlängerungsmittel (b), niedermolekulare, vorzugsweise tri-oder tetrafunktionelle Vernetzungsmittel (b) oder Mischungen aus Kettenverlängerungs- und Vernetzungsmitteln verwendet werden.
   Derartige Kettenverlängerungs- und Vernetzungsmittel (b) werden eingesetzt zur Modifizierung der mechanischen Eigenschaften, insbesondere der Härte der PU-Elastomeren. Geeignete Kettenverlängerungsmittel, wie z.B. Alkandiole, Dialkylenglykole und Polyoxyalkylenglykole und Vernetzungsmittel, z.B. 3- oder 4-wertige Alkohole und oligomere Polyoxyalkylenpolyole mit einer Funktionalität von 3 bis 4, besitzen üblicherweise Molekulargewichte kleiner als 800, vorzugsweise von 18 bis 400 und insbesondere von 60 bis 300. Als Kettenverlängerungsmittel vorzugsweise verwendet werden Alkandiole mit 2 bis 12 Kohlenstoffatomen, vorzugsweise 2,4 oder 6 Kohlenstoffatomen₁ wie z.B. Ethan-, 1,3-Propan-, 1,5-Pentan-1,6-Hexan-, 1,7-Heptan-, 1,8-Octan-, 1,9,Nonan-, 1,10-Decandiol und insbesondere 1,4-Butandiol und Dialkylenglykole mit 4 bis 8 Kohlenstoffatomen, wie z.B. Diethylenglykol und Dipropylenglykol sowie Polyoxyalkylenglykole. Geeignet sind jedoch auch verzweigtkettige und/oder ungesättigte Alkandiole mit üblicherweise nicht mehr als 12 Kohlenstoffatomen, wie z.B. 1,2-Propandiol, 2-Methyl-, 2,2-Dimethyl-propandiol-1,3, 2-Butyl-2-ethylpropandiol-1,3, Buten-2-diol-1,4 und Butin-2-diol-1,4, Diester der Terephthalsäure mit Glykolen mit 2 bis 4 Kohlenstoffatomen, wie z.B. Terephthalsäure-bis-ethylenglykol- oder -butandiol-1,4, Hydroxyalkylenether des Hydrochinons oder Resorcins, wie z.B. 1,4-Di-(p-hydroxyethyl)-hydrochinon oder 1,3-Di-(β-hydroxyethyl)- resorcin, Alkanolamine mit 2 bis 12 Kohlenstoffatomen, wie z.B. Ethanolamin, 2-Aminopropanol und 3-Amino-2,2- dimethylpropanol, N-Alkyldialkanolamine, wie z.B. N-Methyl- und N-Ethyl-diethanolamin, (cyclo)aliphatische Diamine mit 2 bis 15 Kohlenstoffatomen, wie z.B. Ethylen-,1,2-, 1,3-Propylen-, 1,4-Butylen- und 1,6-Hexamethylen-diamin, Isophorondiamin, 1,4-Cyclohexylen-diamin und 4,4'-Diamino-dicyclohexylmethan, N-Alkyl- und N,N'-Dialkyl-alkylendiamine wie z.B. N-Methylpropylendiamin und N,N'-Dimethyl-ethylen-diamin und aromatische Diamine, wie z.B. Methylen-bis-(4-amino-3-benzoesäure-methylester), 1,2-Bis-(2-aminophenyl-thio)-ethan, Trimethylenglykol-di-p-aminobenzoat, 2,4-und 2,6-Toluylen- diamin, 3,5-Diethyl-2,4- und -2,6-toluylen-diamin, 4,4'-Diamino-di- phenylmethan, 3,3'-Dichlor-4,4'-diamino-diphenylmethan und primäre ortho-di-, -tri- und/oder -tetraalkylsubstituierte 4,4'- Diaminodiphenylmethane, wie z.B. 3,3'-Di- und 3,3', 5,5'- Tetraisopropyl-4,4'-diamino-diphenylmethan.
   Als mindestens trifunktionelle Vernetzungsmittel, die zweckmäßigerweise zur Herstellung der PU-Gießelastomere mitverwendet werden, seien beispielhaft genannt: tri- und tetrafunktionelle Alkohole, wie z.B. Glycerin, Trimethylolpropan, Pentaerythrit und Trihydroxycyclohexane und Tetrahydroxyalkylendiamine, wie z.B. Tetra-(2-hydroxyethyl)-ethylen-diamin oder Tetra-(2-hydroxypropyl)ethylen-diamin sowie oligomere Polyoxyalkylen-polyole mit einer Funktionalität von 3 bis 4.
   Die erfindungsgemäß geeigneten Kettenverlängerungs- und Vernetzungsmittel (b) können einzeln oder in Form von Mischungen verwendet werden. Verwendbar sind auch Gemische aus Kettenverlängerungs- und Vernetzungsmitteln.
   Zur Einstellung der Härte der PU-Elastomere können die Aufbaukomponenten (a) und (b) in relativ breiten Mengenverhältnissen variiert werden, wobei die Härte mit zunehmendem Gehalt an difunktionellen Kettenverlängerungs- und mindestens trifunktionellen Vernetzungsmitteln in PU-Elastomeren ansteigt.
   In Abhängigkeit von der gewünschten Härte können die erforderlichen Mengen der Aufbaukomponenten (a) und (b) auf einfache Weise experimentell bestimmt werden. Vorteilhafterweise verwendet werden, bezogen auf das Gewicht der höhermolekularen Polyhydroxylverbindung (a), 5 bis 50 Gew.-% des Ketten verlängerung- und/oder Vernetzungsmittels (b), wobei zur Herstellung von harten PU-Elastomeren vorzugsweise 30 bis 50 Gew.-% eingesetzt werden.
c) Zur Herstellung der mikrozellularen Polyuret-ethanelastomere findet erfindungsgemäß 3,3'-Dimethoxy-4,4'-diisocyanato-diphenyl und/oder 4,4'-Stilbendiisocyanat (c) Verwendung. Gegebenenfalls können zusätzlich zu den erfindungsgemäßen Isocyanaten weitere, allgemein bekannte Isocyanate, beispielsweise NDI und/oder MDI eingesetzt werden.
   Bevorzugt sind Ausführungsformen, bei denen das 3,3'- Dimethoxy-4,4'-diisocyanato-diphenyl und/oder 4,4'-Stilbendiisocyanat (c) in Form eines Isocyanatgruppen aufweisenden Prepolymers verwendet wird. Dieses kann beispielsweise hergestellt werden durch Umsetzung von 3,3'-Dimethoxy-4,4'-diisocyanatodiphenyl und/oder 4,4'-Stilbendiisocyanat mit mindestens einer hochmolekularen Polyhydroxylverbindung (a) oder einer Mischung aus (a) und mindestens einem niedermolekularen Kettenverlängerungs- und/oder Vernetzungsmittel (b).
   Wie bereits ausgeführt wurde, können zur Herstellung der isocyanatgruppenhaltigen Prepolymere Mischungen aus (a) und (b) verwendet werden. Nach einer bevorzugt angewandten Ausführungsform werden die Isocyanatgruppen enthaltenden Prepolymere jedoch hergestellt durch Umsetzung von ausschließlich höhermolekularen Polyhydroxylverbindungen (a) mit 3,3'-Dimethoxy-4,4'-diisocyanato-diphenyl und/oder 4,4' -Stilbendiisocyanat (C). Insbesondere geeignet hierfür sind difunktionelle Polyhydroxylverbindungen mit einem Molekulargewicht von 500 bis 6000, vorzugsweise größer als 800 bis 3500 insbesondere von 1000 bis 3300, die ausgewählt werden aus der Gruppe der Polyesterpolyole, der hydroxylgruppenhaltigen Polycarbonate und Polyoxytetramethylenglykole.
   Die erfindungsgemäß verwendbaren Isocyanatgruppen aufweisenden Prepolymere besitzen vorteilhafterweise Isocyanatgehalte von 2 bis 20 Gew.-% vorzugsweise von 3,5 bis 10 Gew.-%, bezogen auf ihr Gesamtgewicht.
   Zur Herstellung der Isocyanatgruppen enthaltenden Prepolymere können die höhermolekularen Polyhydroxylverbindungen (a) oder Mischungen aus (a) und niedermolekularen Kettenverlängerungs- und/oder Vernetzungsmitteln (b) mit 3,3'-Dimethoxy-4,4'-diisocyanato-diphenyl und/oder 4,4'-Stilbendiisocyanat bei Temperaturen von 80 bis 160°C, vorzugsweise von 110 bis 150°C zur Reaktion gebracht werden.
   Nach Erreichen des theoretisch berechneten Isocyanatgehaltes wird die Reaktion beendet. Hierfür sind üblicherweise Reaktionszeiten im Bereich von 15 bis 200 Minuten, vorzugsweise von 40 bis 150 Minuten erforderlich.
   Die Isocyanatgruppen aufweisenden Prepolymere können in Gegenwart von Katalysatoren hergestellt werden. Es ist jedoch auch möglich, die Isocyanatgruppen aufweisenden Prepolymere in Abwesenheit von Katalysatoren herzustellen und diese der Reaktionsmischung zur Herstellung der PU-Elastomere einzuverleihen.
d) Als Katalysatoren (d) werden zweckmäßigerweise Verbindungen verwendet, die die Reaktion der Hydroxylgruppen enthaltenden Verbindungen der Komponenten (a) und gegebenenfalls (b) mit 3,3'-Dimethoxy-4,4'-diisocyanato-diphenyl und/oder 4,4'-Stilbendiisocyanat (c) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetraalkylalkylendiamine, wie z.B. N,N,N',N'-Tetramethylethylendiamin, N,N,N',N'-Tetramethyl-butandiamin oder -hexandiamin, Pentamethyl-diethylentriamin, Tetramethyl-diaminoethylether, Bis(dimethylaminopropyl)-harnstoff, 1,4-Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyldiethanolamin und Dimethylethanolamin. Vorzugsweise verwendet werden 0,001 bis 3 Gew.-%, insbesondere 0,01 bis 1 Gew.-% Katalysator bzw. Katalysatorkombination bezogen auf das Gewicht der Aufbaukomponenten (a),(c) und gegebenenfalls (b).
e) Als Treibmittel (e) findet hierfür Wasser Verwendung, das mit den organischen Polyisocyanaten und vorzugsweise Isocyanatgruppen aufweisenden Prepolymeren (a) in situ unter Bildung von Kohlendioxid und Aminogruppen reagiert, die ihrerseits mit den Isocyanatprepolymeren zu Harnstoffgruppen weiter reagieren und hierbei als Kettenverlängerungsmittel wirken.
   Da die Aufbaukomponenten (a) und gegebenenfalls (b) aufgrund der Herstellung und/oder chemischen Zusammensetzung Wasser aufweisen können, bedarf es in manchen Fällen keiner separaten Wasserzugabe zu den Aufbaukomponenten (a) und gegebenenfalls (b) oder der Reaktionsmischung. Sofern jedoch der Polyurethan-Formulierung zusätzlich Wasser einverleibt werden muß zur Erzielung des gewünschten Raumgewichts, wird dieses üblicherweise in Mengen von 0,001 bis 5,0 Gew.-%, vorzugsweise von 0,01 bis 2,0 Gew.-% und insbesondere von 0,2 bis 1,2 Gew.-%, bezogen auf das Gewicht der Aufbaukomponente (a) bis (c), verwendet.
   Als Treibmittel (e) können anstelle von Wasser oder vorzugsweise in Kombination mit Wasser auch niedrigsiedende Flüssigkeiten, die unter dem Einfluß der exothermen Polyadditionsreaktion verdampfen und vorteilhafterweise einen Siedepunkt unter Normaldruck im Bereich von - 40 bis 120°C, vorzugsweise von 10 bis 90°C besitzen, oder Gase als physikalisch wirkende Treibmittel oder chemisch wirkende Treibmittel eingesetzt werden.
   Die als Treibmittel geeigneten Flüssigkeiten der oben genannten Art und Gase können z.B. ausgewählt werden aus der Gruppe der Alkane wie z.B. Propan, n- und iso-Butan, n- und iso-Pentan und vorzugsweise der technischen Pentangemische, Cycloalkane und Cycloalkene wie z.B. Cyclobutan, Cyclopenten, Cyclohexen und vorzugsweise Cyclopentan und/oder Cyclohexan, Dialkylether, wie z.B. Dimethylether, Methylethylether oder Diethylether, tert.-Butylmethylether, Cycloalkylenether, wie z.B. Furan, Ketone, wie z.B. Aceton, Methylethylketon, Acetale und/oder Ketale, wie z.B. Formaldehyddimethylacetal, 1,3- Dioxolan und Acetondimethylacetal, Carbonsäureester, wie z.B. Ethylacetat, Methylformiat und Ethylen-Acrylsäuretertiärbutylester, tertiäre Alkohole, wie z.B. tertiär Butanol, Fluoralkane, die in der Troposphäre abgebaut werden und deshalb für die Ozonschicht unschädlich sind, wie z.B. Trifluormethan, Difluormethan, Difluorethan, Tetrafluorethan und Hexafluorethan, Chloralkane, wie z.B. 2-Chlorpropan, und Gase, wie z.B. Stickstoff, Kohlenmonoxid und Edelgase wie z.B. Helium, Neon und Krypton und analog Wasser chemisch wirkende Treibmittel wie Carbonsäuren, wie z.B. Ameisensäure, Essigsäure und Propionsäure.
   Von den als Treibmittel (e) geeigneten, bezüglich NCO-Gruppen inerten Flüssigkeiten werden vorzugsweise Alkane mit 4 bis 8 C-Atomen, Cycloalkane mit 4 bis 6 C-Atomen oder Mischungen mit einem Siedepunkt von - 40°C bis 50°C unter Atmosphärendruck aus Alkanen und Cycloalkanen verwendet. Insbesondere eingesetzt werden C₅-(Cyclo)alkane wie z.B. n-Pentan, iso-Pentane und Cyclopentan und ihre technischen Mischungen.
   Als Treibmittel geeignet sind ferner Salze, die sich thermisch zersetzen, wie z.B. Ammoniumbicarbonat, Ammoniumcarbamat und/oder Ammoniumsalze organischer Carbonsäuren, wie z.B. die Monoammoniumsalze der Malonsäure, Borsäure, Ameisensäure oder Essigsäure.
   Die zweckmäßigste Menge an festen Treibmitteln, niedrigsiedenden Flüssigkeiten und Gasen, die jeweils einzeln oder in Form von Mischungen, z.B. als Flüssigkeits- oder Gasmischungen oder als Gas-Flüssigkeitsmischungen eingesetzt werden können, hängt von der Dichte ab, die man erreichen will und der eingesetzten Menge an Wasser. Die erforderlichen Mengen können durch einfache Handversuche leicht ermittelt werden. Zufriedenstellende Ergebnisse liefern üblicherweise Feststoffmengen von 0,5 bis 35 Gew.-Teilen, vorzugsweise von 2 bis 15 Gew.-Teilen, Flüssigkeitsmengen von 1 bis 30 Gew.-Teilen vorzugsweise von 3 bis 18 Gew.-Teilen und/oder Gasmengen von 0,01 bis 80 Gew.-Teilen, vorzugsweise von 10 bis 35 Gew.-Teilen, jeweils bezogen auf das Gewicht der Aufbaukomponenten (a), (c) und gegebenenfalls (b). Die Gasbeladung mit z.B. Luft, Kohlendioxid, Stickstoff und/oder Helium kann sowohl über die höhermolekularen Kettenverlängerungs- und/oder Vernetzungsmittel (b) als auch über die Polyisocyanate (c) oder über (a) und (c) und gegebenenfalls (b) erfolgen.
   Als Treibmittel keine Anwendung finden, wie bereits ausgeführt wurde, Perfluorchlorkohlenwasserstoffe.
f) Der Reaktionsmischung zur Herstellung der kompakten und vorzugsweise zelligen PU-Elastomeren können gegebenenfalls auch noch Zusatzstoffe (f) einverleibt werden. Genannt seien beispielsweise oberflächenaktive Substanzen, Schaumstabilisatoren, Zellregler, Füllstoffe, Flammschutzmittel, Keimbildungsmittel, Oxidationsverzögerer, Stabilisatoren, Gleit- und Entformungshilfsmittel, Farbstoffe und Pigmente.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie z.B. die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkalioder Ammoniumsalze von Dodecylbenzol- oder Dinaphthylmethandisulfonsäure und Ricinolsäure, Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der höhermolekularen Polyhydroxylverbindungen (a) angewandt.
   Als Füllstoffe, insbesondere verstärkend wirkende Füllstoffe, sind die an sich bekannten, üblichen organischen und anorganischen Füllstoffe, Verstärkungsmittel und Beschwerungsmittel zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum, Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht; Ruß, Melamin, Blähgraphit, Kollophonium, Cyclopentadienylharze und Pfropfpolymerisate.
   Als verstärkend wirkende Füllstoffe finden vorzugsweise Anwendung Fasern, beispielsweise Kohlefasern oder insbesondere Glasfasern, besonders dann, wenn eine hohe Wärmeformbeständigkeit oder sehr hohe Steifigkeit gefordert wird, wobei die Fasern mit Haftvermittlern und/oder Schlichten ausgerüstet sein können. Geeignet Glasfasern, z.B. auch in Form von Glasgeweben, -matten, -vliesen und/oder vorzugsweise Glasseidenrovings oder geschnittener Glasseide aus alkaliarmen E-Glasern mit einem Durchmesser von 5 bis 200 µm, vorzugsweise 6 bis 15 µm eingesetzt werden, weisen nach ihrer Einarbeitung in die Formmassen im allgemeinen eine mittlere Faserlänge von 0,05 bis 1 mm, vorzugsweise von 0,1 bis 0,5 mm auf.
   Die anorganischen und organischen Füllstoffe können einzeln oder als Gemische verwendet werden und werden der Reaktionsmischung üblicherweise in Mengen von 0,5 bis 50 Gew.-%, vorzugsweise 1 bis 30 Gew.-%, bezogen auf das Gewicht der Aufbaukomponenten (a) bis (c), einverleibt.

### Geeignete Flammschutzmittel sind beispielsweise

### Trikresylphosphat, Tris-(2-chlorethyl)phosphat, Tris-(2-chlor-propyl)phosphat, Tris- ( 1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel wie roter Phosphor, Aluminiumoxidhydrat, Antimontrioxid, Arsentrioxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke und/oder Blähgraphit zum Flammfestmachen der erfindungsgemäß hergestellten PU-Elastomeren verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Aufbaukomponenten (a) bis (c) zu verwenden.

Als Keimbildungsmittel können z.B. Talkum, Calciumfluorid, Natriumphenylphosphinat, Aluminiumoxid und feinteiliges Polytetrafluorethylen in Mengen bis zu 5 Gew.-%, bezogen auf das Gesamtgewicht der Aufbaukomponenten (a) bis (c), eingesetzt werden.

Geeignete Oxidationsverzögerer und Wärmestabilisatoren, die den erfindungsgemäßen PU-Elastomeren zugesetzt werden können, sind beispielsweise Halogenide von Metallen der Gruppe 1 des periodischen Systems, z.B. Natrium-, Kalium-, Lithium-Halogenide, gegebenenfalls in Verbindung mit Kupfer-(I) Halogeniden, z.B. Chloriden, Bromiden oder Iodiden, sterisch gehinderte Phenole, Hydrochinone sowie substituierte Verbindungen dieser Gruppen und Mischungen davon, die vorzugsweise in Konzentration bis zu 1 Gew.-%, bezogen auf das Gewicht der Aufbaukomponenten (a) bis (c), verwendet werden. Beispiele für UV-Stabilisatoren sind verschiedene substituierte Resorcine, Salicylate, Benzotriazole und Benzophenone sowie sterisch gehinderte Amine, die im allgemeinen in Mengen bis zu 2,0 Gew.-%, bezogen auf das Gewicht der Aufbaukomponenten (a) bis (c), eingesetzt werden.

Gleit- und Entformungsmittel, die in der Regel ebenfalls in Mengen bis zu 1 Gew.-%, bezogen auf das Gewicht der Aufbaukomponenten (a) bis (c), zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden.

Nähere Angaben über die oben genannten anderen üblichen Hilfs- und Zusatzstoffe sind der Fachliteratur, beispielsweise der Monographie von J.H. Saunders und K.C. Frisch "High Polymers", Band XV1, Polyurethanes, Teil 1 und 2, Verlag Interscience Publishers 1962 bzw. 1964, oder dem Kunststoff Handbuch, Polyurethane, Band VII, Carl-Hanser-Verlag, München, Wien, 1.,2. und 3. Auflage, 1966,1983 und 1993 zu entnehmen.

Zur Herstellung der zelligen PU-Elastomere können in Gegenwart oder Abwesenheit von Katalysatoren (d), physikalisch wirkenden Treibmitteln (e) und Zusatzstoffen (f), die höhermolekularen Polyhydroxylverbindungen (a), gegebenenfalls niedermolekularen Kettenverlängerungs- und/oder Vernetzungsmittel (b) sowie gegebenenfalls die chemisch wirkenden Treibmittel, vorzugsweise die isocyanatgruppenhaltigen Prepolymeren aus (a), (b) und (c) oder vorzugsweise aus (a) und (c) und Kettenverlängerungs- und/oder Vernetzungsmittel (b), Mischungen aus Teilmengen (a) und (b), Mischungen aus Teilmengen (a), (b) und Wasser oder vorzugsweise Mischungen aus (b) und Wasser oder Wasser in solchen Mengen zur Umsetzung gebracht werden, daß das Äquivalenzverhältnis von NCO-Gruppen der Polyisocyanate (c) oder isocyanatgruppenhaltigen Prepolymeren zur Summe der reaktiven Wasserstoffe der Komponenten (a) und gegebenenfalls (b) sowie gegebenenfalls der chemisch wirkenden Treibmittel 0,8 bis 1,2:1, vorzugsweise 0,95 bis 1,15:1 und insbesondere 1,00 bis 1,05:1 beträgt.

Die zelligen PU-Elastomere können nach den in der Literatur beschriebenen Verfahren, wie z.B. dem one shot- oder vorzugsweise Prepolymer-Verfahren, mit Hilfe bekannter Mischvorrichtungen hergestellt werden.

Zur Bildung von zelligen PU-Elastomeren können die Aufbaukomponenten in Gegenwart von Treibmittel, vorzugsweise Wasser, üblicherweise bei einer Temperatur von 80 bis 160°C, vorzugsweise 110 bis 150°C, homogen gemischt und in das gegebenenfalls temperierte Formwerkzeug eingefüllt werden. Nach der Befüllung wird das Formwerkzeug geschlossen und die Reaktionsmischung unter Verdichtung, z.B. mit einem Verdichtungsgrad von 1,1 bis 8, vorzugsweise von 1,2 bis 6 und insbesondere von 2 bis 4 zur Bildung von Formkörpern aufschäumen gelassen. Sobald die Formkörper eine ausreichende Festigkeit besitzen, werden diese entformt. Die Entformzeiten sind u. a. abhängig von der Formwerkzeugtemperatur, -Geometrie und der Reaktivität der Reaktionsmischung und liegen üblicherweise in einem Bereich von 10 bis 180 Minuten.

Die mikrozellularen PU-Elastomere zeigen hervorragende statische und dynamische Kennwerte. Aufgrund ihrer spezifischen Dämpfungscharakteristiken und Dauergebrauchseigenschaften finden sie insbesondere Verwendung in Vibrations- und Stoßdämpfer-Sytemen.

Die nach dem Verfahren hergestellten PU-Elastomere finden Verwendung zur Herstellung von Formkörpern, Verkehrsmittelsektor. Die zelligen PU-Elastomere eignen sich insbesondere zur Herstellung von Dämpfungs- und Federelementen z.B. für Verkehrsmittel, vorzugsweise Kraftfahrzeuge, Puffern und Deckschichten.

### Beispiele

### Vergleichsbeispiel I

### a) Herstellung eines Isocyanatgruppe aufweisenden Prepolymers auf 1,5-NDI-Basis

1000 Gew.-Teile (0,5 mol) eines Poly(ethandiol(0,5 mol)-1,4-butandiol(0,5 mol)-adipats (1 mol)) mit einem durchschnittlichen Molekulargewicht von 2000 (errechnet aus der experimentell ermittelten Hydroxylzahl) wurden auf 140°C erwärmt und bei dieser Temperatur mit 240 Gew.-Teilen (1,14 mol) festem 1,5-NDI unter intensivem Rühren versetzt und zur Reaktion gebracht.

Man erhielt ein Prepolymer mit einem NCO-Gehalt von 4,32 Gew.-% und einer Viskosität bei 90°C von 2800 mPas (gemessen mit einem Rotationsviskosimeter der Firma Haake, mit dem auch die Viskositäten der folgenden Vergleichsbeispiele und Beispiele gemessen werden).

### b) Herstellung zelliger Formteile

Vernetzerkomponente, die bestand aus
- 20,7: Gew.-Teilen 2,2' ,6,6'-Tetraisopropyldiphenyl-carbodiimid
- 2,9: Gew.-Teilen eines Gemisches aus ethoxylierter öl- und Ricinolsäure mit durchschnittlich 9 Oxyethyleneinheiten
- 3,8: Gew.-Teilen des Monoethanolaminsalzes der n-Alkylbenzolsulfonsäure mit C₉- bis C₁₅-Alkylresten
- 36,3: Gew.-Teilen Natriumsalz von sulfatiertem Ricinusöl
- 36,3: Gew.-Teilen Wasser und
- 0,03: Gew.-Teilen einer Mischung aus
30 Gew.-% Pentamethyl-diethylentriamin und
70 Gew.-% N-Methyl-N'-(dimethylaminomethyl)-piperazin

100 Gew.-Teile des auf 90°C temperierten Isocyanatprepolymeres, hergestellt nach Vergleichsbeispiel Ia, wurden mit 2,4 Gew.-Teilen der Vernetzerkomponente ca. 8 Sekunden lang intensiv gerührt. Die Reaktionsmischung wurde danach in ein auf 80°C temperiertes, verschließbares, metallisches Formwerkzeug eingefüllt, das Formwerkzeug verschlossen und die Reaktionsmischung aushärten gelassen. Nach 25 Minuten wurde der mikrozellulare Formkörper entformt und zur thermischen Nachhärtung bei 110°C 16 Stunden getempert.

### Vergleichsbeispiel II

### a) Herstellung eines Isocyanatgruppen aufweisenden Prepolymers auf 4,4'-MDI-Basis

Eine Mischung aus 1000 Gew.-Teilen des in Vergleichsbeispiel Ia beschriebenen Poly(ethandiol-1,4-butandioladipats) und 3 Gew.-Teilen Trimethylolpropan wurde analog den Angaben von Vergleichsbeispiel Ia mit 380 Gew.-Teilen (1,52 mol) auf 50°C temperiertem 4,4'-MDI umgesetzt.

Man erhielt ein Prepolymer mit einem NCO-Gehalt von 5,80 Gew.% und einer Viskosität bei 90°C von 1750 mPas (gemessen mit einem Rotationsviskosimeter).

### b) Herstellung zelliger Formteile

Aus 100 Gew.-Teilen des Prepolymers nach Vergleichsbeispiel IIa und 3,1 Gew.-Teilen der Vernetzerkomponente nach Vergleichsbeispiel Ib wurden analog den Angaben des Vergleichsbeispiels 1 Formkörper hergestellt.

### Vergleichsbeispiel III

### a) Herstellung eines Isocyanatgruppen aufweisenden Prepolymers auf TODl-Basis

Man verfuhr analog den Angaben des Vergleichsbeispiels Ia, verwendete jedoch anstelle von 1,5-NDI 290 Gew.-Teile (1,097 mol) 3,3'-Dimethyl-4,4'-biphenyl-diisocyanat (Tolidindiisocyanat (TODI)).

Man erhielt ein Prepolymer mit einem NCO-Gehalt von 3,76 Gew. -% und einer Viskosität bei 90°C von 5100 mPas (gemessen mit einem Rotationsviskosimeter).

### b) Herstellung zelliger Formteile

Aus 100 Gew.-Teilen des Prepolymers nach Vergleichsbeispiel IIIa und 2,07 Gew.-Teilen der Vernetzerkomponente nach Vergleichsbeispiel Ib wurden analog den Angaben des Vergleichsbeispiels I Formkörper hergestellt, die erst nach einer Formstandzeit von 40 Minuten entformt und zur thermischen Nachhärtung bei 110°C 16 Stunden getempert wurden.

### Beispiel 1

### a) Herstellung eines lsocyanatgruppen aufweisenden Prepolymers auf 3,3'-Dimethoxy-4,4'-diisocyanato-diphenyl-Basis

1000 Gew.-Teile (0,5 mol) eines Poly(erhandiol(0,5 mol)-1,4-butandiol (0,5 mol)-adipats (1 mol)) mit einem durchschnittlichen Molekulargewicht von 2000 (errechnet aus der experimentell ermittelten Hydroxylzahl) wurden auf 140°C erwärmt und bei dieser Temperatur mit 360 Gew.-Teilen (1,22 mol) festem 3,3'- Dimethoxy-4,4'-diisocyanato-diphenyl unter intensivem Rühren versetzt und zur Reaktion gebracht.

Man erhielt ein Prepolymer mit einem NCO-Gehalt von 4,67 Gew.-% und einer Viskosität von 2700 (gemessen mit einem Rotationsviskosimeter).

### b) Herstellung zelliger Formkörper

100 Gew.-Teile des auf 90°C temperierten Isocyanatprepolymers, hergestellt nach Beispiel 1a, wurde unter intensivem Rühren mit 2,59 Gew.-Teilen der Vernetzerkomponente, hergestellt nach Vergleichsbeispiel Ib, gemischt. Nach einer Rührzeit von ca. 8 Sekunden wurde die Reaktionsmischung in ein auf 80°C temperiertes, verschließbares, metallisches Formwerkzeug eingefüllt, das Formwerkzeug verschlossen und die Reaktionsmischung aushärten gelassen. Nach 140 Minuten Formstandzeit wurde der mikrozellulare Formkörper entformt und zur thermischen Machhärtung bei 110°C 16 Stunden lang getempert.

### Beispiel 2

### a) Herstellung eines lsocyanatgruppen aufweisenden Prepolymers auf 3,3'-Dimethoxy-4,4'-diisocyanato-diphenyl-Basis

1000 Gew.-Teile (0,5 mol) eines Poly(ethandiol(0,5 mol)-1,4-butandiol(0,5 mol)-adipats (1 mol)) mit einem durchschnittlichen Molekulargewicht von 2000 (errechnet aus der experimentell ermittelten Hydroxylzahl) wurden auf 140°C erwärmt und bei dieser Temperatur mit 440 Gew.-Teilen (1,49 mol) festem 3,3'- Dimethoxy-4,4'-diisocyanato-diphenyl unter intensivem Rühren versetzt und zur Reaktion gebracht.

Man erhielt ein Prepolymer mit einem NCO-Gehalt von 5,94 Gew.-% und einer Viskosität von 1900 mPas (gemessen mit einem Rotationsviskosimeter).

### b) Herstellung zelliger Formkörper

100 Gew.-Teile des auf 90°C temperierten Isocyanatprepolymers, hergestellt nach Beispiel 2a, wurden unter intensivem Rühren mit 3,29 Gew.-Teilen der Vernetzerkomponente, hergestellt nach Vergleichsbeispiel Ib, gemischt.

Nach einer Rührzeit von ca. 8 Sekunden wurde die Reaktionsmischung in ein auf 80°C temperiertes, verschließbares, metallisches Formwerkzeug eingefüllt, das Formwerkzeug verschlossen und die Reaktionsmischung aushärten gelassen. Nach 140 Minuten Formstandzeit wurde der mikrozellulare Formkörper entformt und zur thermischen Nachhärtung bei 110°C 16 Stunden lang getempert.

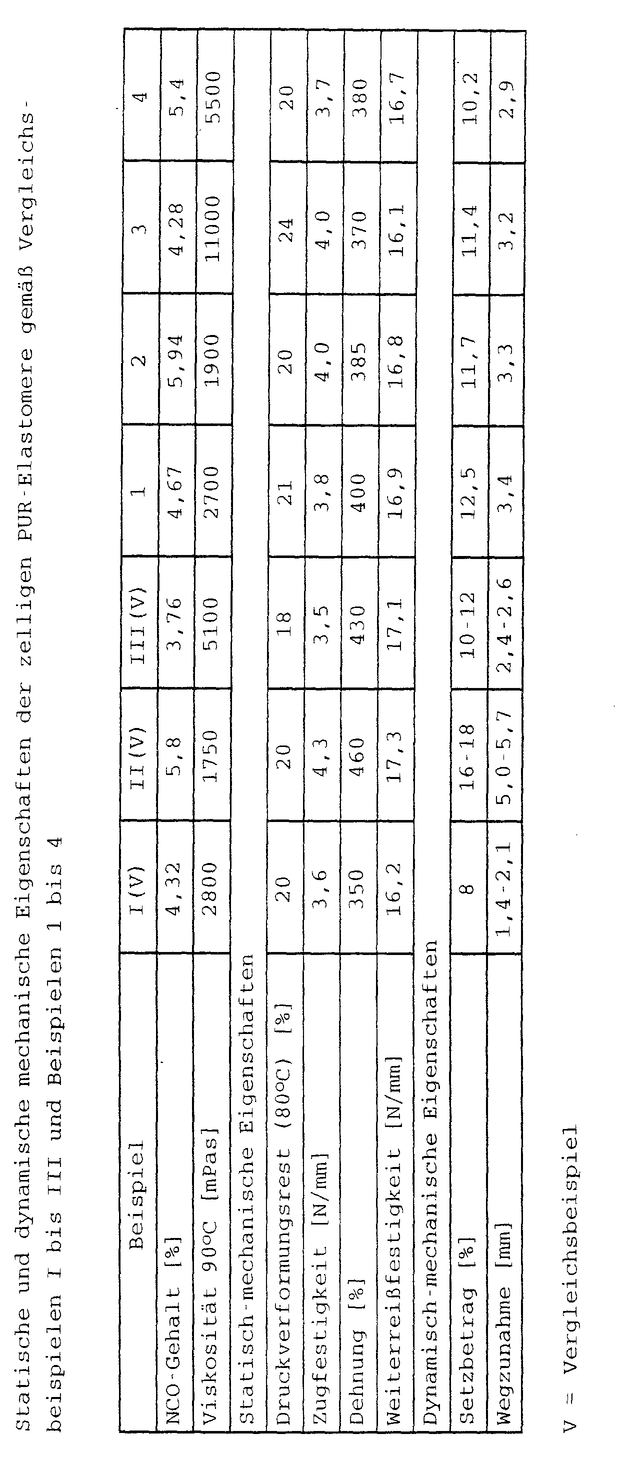

### Beispiel 3

### a) Herstellung eines lsocyanatgruppen aufweisenden Prepolymers auf 4,4'-Stilbendiisocyanat-Basis

1000 Gew.-Teile (0,5 mol) eines Poly(ethandiol(0,5 mol)-1,4-butandiol (0,5 mol)-adipats (1 mol) mit einem durchschnittlichen Molekulargewicht von 2000 (errechnet aus der experimentell ermittelten Hydroxylzahl) wurden auf 140°C erwärmt und bei dieser Temperatur mit 340 Gew.-Teilen (1,30 mol) festem 4,4'-Stilbendiisocyanat unter intensivem Rühren versetzt und zur Reaktion gebracht.

Man erhielt ein Prepolymer mit einem NCO-Gehalt von 4,28 Gew.-% und einer Viskosität von 11000 (gemessen mit einem Rotationsviskosimeter).

### b) Herstellung zelliger Formkörper

100 Gew.-Teile des auf 90°C temperierten Isocyanatprepolymers, hergestellt nach Beispiel 3a, wurde unter intensivem Rühren mit 2,44 Gew.-Teilen der Vernetzerkomponente, hergestellt nach Vergleichsbeispiel Ib, gemischt.

Nach einer Rührzeit von ca. 8 Sekunden wurde die Reaktionsmischung in ein auf 80°C temperiertes, verschließbares, metallisches Formwerkzeug eingefüllt, das Formwerkzeug verschlossen und die Reaktionsmischung aushärten gelassen. Nach 30 Minuten Formstandzeit wurde der mikrozellulare Formkörper entformt und zur thermischen Nachhärtung bei 110°C 16 Stunden lang getempert.

### Beispiel 4

### a) Herstellung eines lsocyanatgruppen aufweisenden Prepolymers auf 4,4'Stilbendiisocyanat-Basis

1000 Gew.-Teile (0,5 mol) eines Poly(ethandiol(0,5 mol)-1,4-butandiol(0,5 mol)-adipats (1 mol)) mit einem durchschnittlichen Molekulargewicht von 2000 (errechnet aus der experimentell ermittelten Hydroxylzahl) wurden auf 140°C erwärmt und bei dieser Temperatur mit 382 Gew.-Teilen (1,46 mol) festem 4,4'-Stilbendiisocyanat unter intensivem Rühren versetzt und zur Reaktion gebracht. Man erhielt ein Prepolymer mit einem NCO-Gehalt von 5,40 Gew.-% und einer Viskosität von 5500 mPas (gemessen mit einem Rotationsviskosimeter).

### b) Herstellung zelliger Formkörper

100 Gew.-Teile des auf 90°C temperierten Isocyanatprepolymers, hergestellt nach Beispiel 4a, wurden unter intensivem Rühren mit 3,08 Gew.-Teilen der Vernetzerkomponente, hergestellt nach Vergleichsbeispiel Ib, gemischt.

Nach einer Rührzeit von ca. 8 Sekunden wurde die Reaktionsmischung in ein auf 80°C temperiertes, verschließbares, metallisches Formwerkzeug eingefüllt, das Formwerkzeug verschlossen und die Reaktionsmischung aushärten gelassen. Nach 30 Minuten Formstandzeit wurde der mikrozellulare Formkörper entformt und zur thermischen Nachhärtung bei 110°C 16 Stunden lang getempert.

## Patentansprüche

1. Verfahren zur Herstellung von mikrozellularen Polyurethan-Elastomeren durch Umsetzung von
a) Polyhydroxylverbindungen mit einer Funktionalität von 2 oder 3 und einem Molekulargewicht von 500 bis 6000 und gegebenenfalls
b) Kettenverlängerungs- und/oder Vernetzungsmitteln mit Molekulargewichten von 18 bis 400 mit
c) 3,3'-Dimethoxy-4,4'-diisocyanato-diphenyl und/oder 4,4'-Stilbendiisocyanat oder Gemische aus 3,3'-Dimethoxy-4,4'-diisocyanato-diphenyl und/oder 4,4'-Stilbendiisocyanat mit anderen Isocyanaten in Abwesenheit oder vorzugsweise in Gegenwart von
d) Katalysatoren
e) Treibmitteln und
f) Zusatzstoffen

2. Verfahren nach Anspruch 1, dadurch gekennzeichnet, daß die Polyhydroxylverbindungen a) difunktionell sind, ein Molekulargewicht von 800 bis 3500 besitzen und ausgewählt sind aus der Gruppe der Polyesterpolyole, hydroxylgruppenhaltigen Polycarbonate und Polyoxybutylenglykole.

3. Verfahren nach Anspruch 1, dadurch gekennzeichnet, daß die Kettenverlängerungsmittel ein Molekulargewicht bis 400 besitzen und ausgewählt sind aus der Gruppe der Alkandiole, Dialkylenglykole und Polyoxyalkylenglykole und die Vernetzungsmittel ein Molekulargewicht bis 400 besitzen und ausgewählt sind aus der Gruppe der 3- oder 4-wertigen Alkohole und oligomeren Polyoxyalkylenpolyole mit einer Funktionalität von 3 bis 4.

4. Verfahren nach Anspruch 1, dadurch gekennzeichnet, daß
a) in einem ersten Reaktionsschritt aus 3,3'-Dimethoxy-4,4'-diisocyanato-diphenyl und/oder 4,4'-Stilbendiisocyanat und Polyhydroxylverbindungen a) und gegebenenfalls einem Kettenverlängerungs- und/oder Vernetzungsmittel b) ein Prepolymer mit einem NCO-Gehalt von 2 bis 20 Gew.-% hergestellt wird
b) das erhaltene Prepolymer in einem zweiten Reaktionsschritt mit Wasser oder einer Mischung aus Wasser und Kettenverlängerungs- und/oder Vernetzungsmittel b) umgesetzt wird.

5. Verfahren nach Anspruch 1, dadurch gekennzeichnet, daß
a) in einem ersten Reaktionsschritt aus 3,3'-Dimethoxy-4,4'-diisocyanato-diphenyl und/oder 4,4'-Stilbendiisocyanat und einem Teil der Polyhydroxylverbindung a) und gegebenenfalls einem Kettenverlängerungs- und/oder Vernetzungsmittel b) ein Prepolymer hergestellt wird und
b) das erhaltene Prepolymer in einem zweiten Reaktionsschritt mit einer Mischung aus dem Rest der höhermolekularen Polyhydroxylverbindung, Wasser und gegebenenfalls einem Kettenverlängerungs- und/oder Vernetzungsmittel umgesetzt wird.

6. Verfahren nach Anspruch 1, dadurch gekennzeichnet, daß das Verhältnis der NCO-Gruppe der Komponente (c) zu den Zerewitinoff-aktiven Wasserstoffatomen der Komponenten (a), (b) und (e) 0,8 bis 1,2 ist.

7. Verfahren nach Anspruch 1, dadurch gekennzeichnet, daß die verwendete Wassermenge bis 5 Gew.-% bezogen auf das Gesamtgewicht der Komponenten (a), (c) und gegebenenfalls (b) beträgt.

8. Verfahren nach Anspruch 1, dadurch gekennzeichnet, daß das Treibmittel (e) ausgewählt wird aus der Gruppe der Alkane mit 4 bis 8 C-Atomen und der Cycloalkane mit 4 bis 6 C-Atomen.

## Claims

1. A process for preparing microcellular polyurethane elastomers by reacting
a) having a functionality of 2 or 3 and a molecular weight of from 500 to 6000 polyhydroxyl compounds and, if desired,
b) chain extenders and/or crosslinkers having molecular weights of from 18 to 400 with
c) 3,3'-dimethoxy-4,4'-diisocyanatobiphenyl and/or stilbene 4,4'-diisocyanate or mixtures of 3,3'-dimethoxy-4,4'-diisocyanatobiphenyl and/or stilbene 4,4'-diisocyanate with other isocyanates in the absence or preferably in the presence of
d) catalysts
e) blowing agents and
f) additives.

2. A process as claimed in claim 1, wherein the polyhydroxyl compounds a) are difunctional, have a molecular weight of from 800 to 3500 and are selected from the group consisting of polyester polyols, hydroxyl- containing polycarbonates and polyoxybutylene glycols.

3. A process as claimed in claim 1, wherein the chain extenders have a molecular weight of up to 400 and are selected from the group consisting of alkanediols, dialkylene glycols and polyoxyalkylene glycols and the crosslinkers have a molecular weight of up to 400 and are selected from the group consisting of trihydric or tetrahydric alcohols and oligomeric polyoxyalkylene polyols having a functionality of from 3 to 4.

4. A process as claimed in claim 1, wherein
a) in a first reaction step, a prepolymer having an NCO content of from 2 to 20% by weight is prepared from 3,3'-dimethoxy-4,4'-diisocyanatobiphenyl and/or stilbene 4,4'-diisocyanate and polyhydroxyl compounds a) and, if desired, a chain extender and/or crosslinker b), and
b) the prepolymer obtained is, in a second reaction step, reacted with water or a mixture of water and a chain extender and/or crosslinker b).

5. A process as claimed in claim 1, wherein
a) in a first reaction step, a prepolymer is prepared from 3,3'-dimethoxy-4,4'-diisocyanatobiphenyl and/or stilbene 4,4'-diisocyanate and a part of the polyhydroxyl compound a) and, if desired, a chain extender and/or crosslinker b), and
b) the prepolymer obtained is, in a second reaction step, reacted with a mixture of the remainder of the relatively high molecular weight polyhydroxyl compound, water and, if desired, a chain extender and/or crosslinker.

6. A process as claimed in claim 1, wherein the ratio of the NCO groups of the component (c) to the Zerevitinov-active hydrogen atoms of the components (a), (b) and (e) is from 0.8 to 1.2.

7. A process as claimed in claim 1, wherein the amount of water used is up to 5% by weight based on the total weight of the components (a), (c) and, if used, (b).

8. A process as claimed in claim 1, wherein the blowing agent (e) is selected from the group consisting of alkanes having from 4 to 8 carbon atoms and cycloalkanes having from 4 to 6 carbon atoms.

## Revendications

1. Procédé de préparation d'élastomères de polyuréthane micro-cellulaires par réaction
a) de composés polyhydroxylés avec une fonctionnalité de 2 ou de 3 et avec un poids moléculaire de 500 à 6.000 et, le cas échéant,
b) d'agents d'allongement de chaîne et/ou de réticulation avec des poids moléculaires de 18 à 400 avec
c) du 3,3'-diméthoxy-4,4'-diisocyanatodiphényle et/ou du 4,4'-stilbènediisocyanate ou des mélanges de 3,3'-diméthoxy-4,4'-diisocyanatodiphényle et/ou de 4,4'-stilbènediisocyanate avec d'autres isocyanates en absence ou, de préférence en présence
d) de catalyseurs
e) d'agents d'expansion et
f) d'additifs.

2. Procédé selon la revendication 1, caractérisé en ce que les composés polyhydroxylés a) sont difonctionnels, possèdent un poids moléculaire de 800 à 3.500 et sont choisis dans le groupe des polyesterpolyols, des polycarbonates contenant des groupes hydroxyles et des polyoxybutylène-glycols.

3. Procédé selon la revendication 1, caractérisé en ce que les agents d'allongement de chaîne possèdent un poids moléculaire allant jusqu'à 400 et sont choisis dans le groupe des alcanediols, des dialkylèneglycols et des polyoxyalkylèneglycols et en ce que les agents de réticulation possèdent un poids moléculaire allant jusqu'à 400 et sont choisis dans le groupe des alcools tri- ou tétravalents et des polyoxyalkylènepolyols oligomères avec une fonctionnalité de 3 à 4.

4. Procédé selon la revendication 1, caractérisé en ce que
a) on prépare dans une première étape de réaction à partir de 3,3'-diméthoxy-4,4'-diisocyanatodiphényle et/ou de 4,4'-stilbènediisocyanate et de composés polyhydroxylés a) et, le cas échéant, un agent d'allongement de chaîne et/ou de réticulation b) un prépolymère avec une teneur en NCO de 2 à 20 % en poids
b) on fait réagir le prépolymère résultant dans une deuxième étape de réaction avec de l'eau ou avec un mélange d'eau et d'agents d'allongement de chaîne et/ou de réticulation b).

5. Procédé selon la revendication 1, caractérisé en ce que
a) on prépare dans une première étape de réaction à partir de 3,3'-diméthoxy-4,4'-diisocyanatodiphényle et/ou de 4,4'-stilbènediisocyanate et d'une partie du composé polyhydroxylé a) et, le cas échéant, d'un agent d'allongement de chaîne et/ou de réticulation b) un prépolymère et
b) on fait réagir le prépolymère résultant dans une deuxième étape de réaction avec un mélange du reste du composé polyhydroxylé à poids moléculaire élevé, de l'eau et, le cas échéant, d'un agent d'allongement de chaîne et/ou de réticulation.

6. Procédé selon la revendication 1, caractérisé en ce que le rapport du groupe NCO du composant (c) aux atomes d'hydrogène à activité de type Zerevitinov des composants (a), (b) et (e) vaut 0,8 à 1,2.

7. Procédé selon la revendication 1, caractérisé en ce que la quantité d'eau utilisée représente jusqu'à 5 % en poids par rapport au poids total des composants (a), (c) et le cas échéant (b).

8. Procédé selon la revendication 1, caractérisé en ce que l'agent d'expansion (e) est choisi dans le groupe des alcanes avec 4 à 8 atomes de carbone et des cycloalcanes avec 4 à 6 atomes de carbone.
